# EUROPÄISCHE PATENTANMELDUNG

(11) **EP 4 620 737 A1**
(43) Veröffentlichungstag der Anmeldung: **24.09.2025**
(21) Anmeldenummer: 25156000.9
(22) Anmeldetag: 05.02.2025
(51) Int. Cl.: B60Q 1/14

(54) **STEUEREINHEIT, SYSTEM UND VERFAHREN ZUM ERZEUGEN EINES ADAPTIVEN SCHEINWERFERLICHTS SOWIE DAS SYSTEM AUFWEISENDES FAHRZEUG**

(30) Priorität: 21.03.2024 DE 102024202701
(71) Anmelder: Stellantis Auto SAS, 78300 Poissy (FR)
(72) Erfinder: NEITZKE, Carsten, 65428 Rüsselsheim am Main (DE)
(74) Vertreter: ESIP

(57) **Zusammenfassung**

Eine Steuereinheit zum Erzeugen eines adaptiven Scheinwerferlichts mittels einer Fahrzeugscheinwerferanlage (21) mit wenigstens einem HD-Modul zum hochaufgelösten Ausleuchten wenigstens eines HD-Lichtfelds wird bereitgestellt. Die Steuereinheit umfasst einen Prozessor (24), eine Speichereinheit (25) zum Speichern von Daten und maschinenlesbaren Anweisungen für den Prozessor (24), und eine Schnittstelle (26). Die Schnittstelle (26) ist dazu ausgebildet, Sensordaten von einer Sensorik zum Erfassen einer aktuellen Fahrsituation zu empfangen und Steuersignale zum Ansteuern der Fahrzeugscheinwerferanlage (21) auszugeben, und wobei die Speichereinheit (25) Anweisungen für den Prozessor (24) enthält,
die Sensordaten auszuwerten und die Fahrzeugscheinwerferanlage basierend auf der aktuellen Fahrsituation so anzusteuern, dass bei einer Situationsänderung ein erstes Bild graduell in ein zweites Bild übergeht. Ferner wird ein System, ein Verfahren und ein das System aufweisendes Fahrzeug bereitgestellt.

## Beschreibung

Die vorliegende Offenbarung betrifft im Allgemeinen Verfahren zum Steuern von Scheinwerfern in Fahrzeugen. Im speziellen betrifft die vorliegende Offenbarung eine Steuervorrichtung, ein Verfahren und ein System zum Erzeugen eines adaptiven Scheinwerferlichts sowie ein das System aufweisendes Fahrzeug.

Es sind adaptive Fahrzeugscheinwerfer zum Erzeugen eines blendfreien Scheinwerferlichts bekannt. Es sind ferner Scheinwerfer mit sogenannten HD- (High-Definition) Modulen bekannt. Mit den HD-Modulen können insbesondere hochaufgelöste Projektionen, beispielsweise auf der Fahrbahn, erzeugt werden. In adaptiven Scheinwerfersystemen wird das Scheinwerferlicht auf die jeweilige Fahrsituation angepasst. Aufgrund der hohen Auflösung der HD-Bilder weisen HD-Module eine begrenzte Bildwiederholfrequenz auf, so dass bei einer situationsgemäßen Anpassung eines HD-Bilds störende Bildartefakte entstehen können.

Eine Aufgabe der Ausführungsformen der vorliegenden Offenbarung ist es, eine Steuervorrichtung, ein System und ein Verfahren bereitzustellen, welche es ermöglichen, bei hochaufgelösten adaptiven Fahrzeugscheinwerfern auftretende Störeffekte zu reduzieren.

Zur Lösung dieser Aufgabe wird nach einem ersten Aspekt eine Steuereinheit zum Erzeugen eines adaptiven Scheinwerferlichts mittels einer Fahrzeugscheinwerferanlage mit wenigstens einem HD-Modul zum Erzeugen von hochaufgelösten Bildern bzw. Bildprojektionen in wenigstens einem HD-Lichtfeld bereitgestellt.

Die Fahrzeugscheinwerferanlage kann insbesondere als LED-(Light Emitting Diode) Matrix-Fahrzeugscheinwerferanlage zum Erzeugen eines segmentierten Fernlichts, insbesondere eines in vertikaler und horizontaler Richtung segmentierten Fernlichts, ausgebildet sein. Die HD-(High Definition) Module können insbesondere dazu ausgebildet sein, eine HD-Funktionalität bereitzustellen, um beispielsweise hochaufgelöste Projektionen zur Darstellung von Symbolen und/oder Hinweisinformationen für Verkehrsteilnehmer bereitzustellen. Die HD-Module können insbesondere dazu ausgebildet sein, eine Vielzahl von HD-Lichtspots bzw. Lichtpunkten oder HD-Pixeln zum pixelweisen Ausleuchten eines hochaufgelösten HD-Lichtfelds zu erzeugen.

Die Steuervorrichtung umfasst einen Prozessor, eine Speichereinheit zum Speichern von Daten und maschinenlesbaren Anweisungen für den Prozessor und eine Schnittstelle.

Die Schnittstelle ist dazu ausgebildet, Sensordaten von einer Sensorik zum Erfassen einer aktuellen Fahrsituation zu empfangen und Steuersignale bzw. Steuerbefehle zum Ansteuern der Fahrzeugscheinwerferanlage auszugeben.

Die Speichereinheit enthält Anweisungen für den Prozessor, die Sensordaten auszuwerten und die Fahrzeugscheinwerferanlage basierend auf der aktuellen Fahrsituation so anzusteuern, dass bei einer Situationsänderung ein erstes Bild graduell in ein zweites Bild übergeht. Das erste Bild und das zweite Bild können insbesondere durch das wenigstens ein HD-Modul vor bzw. nach der Situationsänderung in dem wenigstens HD-Lichtfeld erzeugt bzw. projiziert werden.

Die Sensorik kann insbesondere einen oder mehrere Sensoren zum Erfassen der aktuellen Fahrsituation umfassen. Unter der Fahrsituation wird in diesem Kontext eine für die Erzeugung des adaptiven Scheinwerferlichts relevante Fahrsituation, insbesondere Verkehrssituation und/oder Fahrzeugzustand umfassen. Die Ermittlung der Fahrsituation kann insbesondere eine Ermittlung von durch die Fahrzeugscheinwerferanlage einer Blendungsgefahr ausgesetzten Verkehrsteilnehmern umfassen, so dass durch eine entsprechende adaptive Ansteuerung der Fahrzeugscheinwerferanlage diese entblendet werden können. Das Entblenden anderer Verkehrsteilnehmer kann insbesondere durch Bilden wenigstens einer Dunkelzone in dem Scheinwerferlichtfeld erfolgen.

Die Ermittlung der aktuellen Fahrsituation kann ferner Ermitteln von blendungskritischen Bereichen anderer Verkehrsteilnehmer umfassen, so dass durch die adaptive Ansteuerung der Fahrzeugscheinwerferanlage die blendungskritischen Bereiche aus der Scheinwerferlichtverteilung gezielt ausgeblendet werden können. Ein blendungskritischer Bereich kann grundsätzlich jeder Bereich in dem Scheinwerferlichtfeld sein, dessen Anleuchten durch das Scheinwerferlicht eine Blendwirkung bzw. Blendung insbesondere eines Verkehrsteilnehmers verursachen kann. Die Blendwirkung kann eine direkte Blendwirkung, bei der die Lichtquelle direkt ins Auge scheint, sowie eine indirekte oder reflektierte Blendwirkung umfassen, bei der das Licht von einer Oberfläche reflektiert wird, bevor es ins Auge gelangt. Ein durch die Fahrzeugscheinwerferanlage einer Blendungsgefahr ausgesetzter Verkehrsteilnehmer kann insbesondere ein oder mehrere vorausfahrende und/oder entgegenkommende Fahrzeuge umfassen. Blendungskritische Bereiche anderer Fahrzeuge können insbesondere alle Bereiche anderer Fahrzeuge sein, von denen eine Blendwirkung auf einen oder mehrere Insassen, insbesondere den Fahrer des anderen Fahrzeugs ausgehen kann. Blendungskritische Bereiche können insbesondere Fahrzeugscheiben oder Spiegel, wie beispielsweise Rückspiegel und/oder Seitenspiegel, der anderen Fahrzeuge umfassen. Blendungskritische Bereiche können auch Straßenabschnitte, insbesondere durch Regen oder Witterung reflektierend gewordene bzw. nasse Straßenabschnitte, sein. Blendungskritische Bereiche können grundsätzlich auch andere bewegliche oder unbewegliche Objekte in Fahrbahnnähe wie z. B. Fußgänger oder Tiere, Fensterscheiben von Gebäuden oder reflektierende Gebäudeteile sein.

Das gezielte Ausblenden der blendungskritischen Bereiche kann insbesondere unter Heranziehung von HD-Modulen bzw. der HD-Funktionalität der Fahrzeugscheinwerferanlage erfolgen. Durch die Ausnutzung der HD-Funktionalität der Fahrzeugscheinwerferanlage kann die wenigstens eine Dunkelzone hochaufgelöst abgegrenzt werden. Insbesondere kann die wenigstens eine Dunkelzone an die Größe bzw. Form des wenigstens einen blendungskritischen Bereichs angepasst werden, so dass die Gesamtfläche der wenigstens einen Dunkelzone reduziert werden kann. Somit kann das effektive Fernlichtfeld bzw. das tatsächlich ausgeleuchtete Fernlichtfeld vergrößert werden, ohne die Sicht von anderen Verkehrsteilnehmern bzw. der Insassen des anderen Fahrzeugs zu beeinträchtigen.

Durch den graduellen Übergang des ersten Bilds in das zweite Bild kann insbesondere ein hektisches Verhalten der Fahrzeugscheinwerferanlage bei Änderungen von Fahrsituationen vermieden werden. Insbesondere kann dadurch ein weicher bzw. fließender Übergang von dem ersten Bild zu dem zweiten Bild erzielt werden, so dass eine situationsbedingte Bildänderung ohne störende Sprünge oder andere Bildartefakte erfolgen kann.

Die Speichereinheit kann Anweisungen für den Prozessor enthalten, die Fahrzeugscheinwerferanlage so anzusteuern, dass das erste Bild während einer vordefinierten Übergangszeit bzw. eines Übergangszeitintervalls in das zweite Bild graduell übergeht. Die Einstellung der Übergangszeit kann insbesondere auf der Bildwiederholfrequenz des mindestens einen HD-Moduls basieren. Beispielsweise kann bei niedrigen Bildwiederholfrequenzen die Übergangszeit entsprechend angehoben werden, um die frequenzbedingten Bildartefakte zu unterdrücken bzw. abzuschwächen.

Die Speichereinheit kann Anweisungen für den Prozessor enthalten, die Fahrzeugscheinwerferanlage so anzusteuern, dass während der Übergangszeit sowohl das erste Bild als auch das zweite Bild erzeugt bzw. projiziert werden. Insbesondere können sich das erste Bild und das zweite Bild in der Übergangszeit wenigstens teilweise und wenigstens zeitweise überlappen. Durch das gleichzeitige Projizieren bzw. durch das Überlappen des ersten und des zweiten Bilds während der Übergangszeit kann ein sanfter bzw. visuell nicht oder kaum störender Übergang mit ineinanderfließenden zwei Bildern erzielt werden.

Die Speichereinheit kann Anweisungen für den Prozessor enthalten, die Fahrzeugscheinwerferanlage so anzusteuern, dass das erste Bild durch eine Überblendung mit einer Kreuzblendenfunktion in das zweite Bild übergeht. Mittels der Kreuzblende kann insbesondere erreicht werden, dass die Leuchtintensität des ersten Bilds graduell insbesondere im Wesentlichen monoton abnimmt, während die Leuchtintensität des zweiten Bilds im Wesentlichen gleichermaßen graduell zunimmt. Die Summe der beiden Leuchtintensitäten kann dabei im Wesentlichen konstant bleiben, so dass der Übergang visuell weniger auffällt. Mittels der Kreuzblende kann insbesondere eine besonders flüssiger Bildverlauf und damit eine fließende bzw. wenig auffällige Adaption der Lichtverteilung erzielt werden. Die mit dem Bildwechsel verbundenen Bildartefakte und die dadurch verursachten Fahrerirritationen können somit unterdrückt bzw. reduziert werden.

Die Speichereinheit kann Anweisungen für den Prozessor enthalten, die Fahrzeugscheinwerferanlage zum Erzeugen wenigstens einer Dunkelzone in einem Fernlichtfeld und/oder in einem Abblendlichtfeld der Fahrzeugscheinwerferanlage unter Ausnutzung der HD-Funktionalität anzusteuern, falls die Auswertung der Sensordaten ergibt, dass die wenigstens eine Dunkelzone wenigstens teilweise innerhalb des HD-Lichtfelds und gleichzeitig innerhalb des Fernlichtfelds und/oder innerhalb des Abblendlichts fällt. Insbesondere kann die Fahrzeugscheinwerferanlage so ausgebildet sein, dass das wenigstens ein HD-Lichtfeld wenigstens teilweise mit dem Fernlichtfeld und/oder mit dem Abblendlichtfeld überlappt. Die Steuereinheit kann insbesondere konfiguriert sein, bzw. die Speichereinheit kann Anweisungen für den Prozessor enthalten, die Fahrzeugscheinwerferanlage anzusteuern, zu der blendfreien Fernlicht- bzw. Abblendlicht-Funktionalität die HD-Funktionalität heranzuziehen, um die Gesamtfläche der Dunkelzonen in den Überlappungsbereichen zu minimieren. Aufgrund der hohen Auflösung des HD-Lichts kann die HD-Funktionalität des wenigstens einen HD-Moduls dazu genutzt werden, etwaige in dem Fernlicht und/oder Abblendlicht erzeugte Dunkelzonen weiter einzuschränken. Insbesondere kann die Fahrzeugscheinwerferanlage so ausgebildet sein, dass das HD-Lichtfeld das Scheinwerferfernlichtfeld wenigstens teilweise abdeckt, so dass die Fernlichtfunktionalität wenigstens teilweise durch die HD-Module bereitgestellt bzw. übernommen werden kann. Durch die Ausnutzung der HD-Funktionalität können somit hochaufgelöste bzw. an die blendungskritischen Bereiche genauer angepasste Dunkelzonen im Fernlichtbereich erzeugt werden.

Nach einem zweiten Aspekt wird ein System zum Erzeugen eines adaptiven Scheinwerferlichts bereitgestellt. Das System umfasst eine Fahrzeugscheinwerferanlage mit wenigstens einem HD-Modul zum Erzeugen von hochaufgelösten Bildern in wenigstens einem HD-Lichtfeld. Das System umfasst ferner eine Steuereinheit gemäß dem ersten Aspekt sowie eine Sensorik zum Erfassen einer aktuellen Fahrzeugsituation. Insbesondere kann die Sensorik eine oder mehrere Sensoren, wie Kameras, Radar-, LIDAR- und/oder Infrarotsensoren umfassen und dazu ausgebildet sein, Position von Verkehrsteilnehmern zu erfassen, welche einer Blendungsgefahr ausgesetzt sind. Insbesondere kann die Sensorik ausgebildet sein, einen oder mehrere blendungskritische Bereiche, wie Rückspiegel, Windschutz- oder Heckscheiben, eines anderen durch die Fahrzeugscheinwerferanlage einer Blendungsgefahr ausgesetzten Fahrzeugs zu erfassen. Die Speichereinheit enthält Anweisungen für den Prozessor, die Sensordaten auszuwerten und die Fahrzeugscheinwerferanlage basierend auf der aktuellen Fahrsituation so anzusteuern, dass bei einer Situationsänderung ein erstes Bild graduell in ein zweites Bild übergeht. Aufgrund des graduellen Übergangs zwischen den Bildern kann bei einer Situationsänderung ein weicher bzw. fließender Bildwechsel ohne störende Sprünge oder andere Bildartefakte realisiert werden.

Die Fahrzeugscheinwerferanlage kann wenigstens ein Fernlichtmodul zum Bereitstellen einer blendfreien Fernlichtfunktionalität und wenigstens ein Abblendlichtmodul zum Bereitstellen einer Abblendlichtfunktionalität umfassen. Das wenigstens eine HD-Modul kann zum Ausleuchten wenigstens eines HD-Lichtfelds ausgebildet sein, welches sich in vertikaler Richtung wenigstens teilweise über eine Hell-Dunkel-Grenze des Abblendlichts erstreckt. Insbesondere kann die Fahrzeugscheinwerferanlage so ausgebildet sein, dass das wenigstens ein HD-Lichtfeld wenigstens teilweise mit dem Fernlichtfeld und/oder mit dem Abblendlichtfeld überlappt. Die Steuereinheit kann insbesondere konfiguriert sein bzw. die Speichereinheit kann Anweisungen für den Prozessor enthalten, die Fahrzeugscheinwerferanlage anzusteuern, zu der blendfreien Fernlicht-Funktionalität die HD-Funktionalität heranzuziehen, so dass die Gesamtfläche der Dunkelzonen in den Überlappungsbereichen reduziert werden kann.

In einigen Ausführungsbeispielen ist das wenigstens eine Abblendlichtmodul zum Bereitstellen einer blendfreien Abblendfunktionalität ausgebildet, wobei die Speichereinheit Anweisungen für den Prozessor enthalten kann, das wenigstens eine HD-Modul zur Unterstützung der Abblendfunktionalität des wenigstens einen Abblendmoduls anzusteuern. Durch das blendfreie Abblendlicht kann insbesondere eine indirekte Blendung, beispielsweise durch die Reflexion an einer nassen Fahrbahn, verhindert werden. Durch die Heranziehung der HD-Funktionalität kann dabei die Größe der Dunkelzonen reduziert werden, so dass die Abblendfunktionalität insgesamt weniger stark beeinträchtigt wird.

Nach einem dritten Aspekt wird ein Verfahren zum Erzeugen eines adaptiven Scheinwerferlichts mittels einer Fahrzeugscheinwerferanlage mit wenigstens einem HD-Modul zum Erzeugen von hochaufgelösten Bildern in wenigstens einem HD-Lichtfeld bereitgestellt. Gemäß dem Verfahren werden Sensordaten von einer Sensorik zum Erfassen einer aktuellen Fahrsituation bereitgestellt und zum Ermitteln der aktuellen Fahrsituation ausgewertet. Gemäß dem Verfahren wird die Fahrzeugscheinwerferanlage basierend auf der aktuellen Fahrsituation angesteuert, so dass bei einer Situationsänderung ein erstes Bild in ein zweites Bild graduell übergeht. Der graduelle Übergang zwischen den Bildern ermöglicht einen weichen Bildwechsel, so dass störende Sprünge oder andere Bildartefakte vermieden bzw. weitgehend unterdrückt werden können.

Nach einem vierten Aspekt wird ein Fahrzeug bereitgestellt. Das Fahrzeug umfasst eine Fahrzeugscheinwerferanlage mit wenigstens einem HD-Modul zum Erzeugen von hochaufgelösten Bildern in wenigstens einem HD-Lichtfeld, wobei in dem Fahrzeug ein System zum Erzeugen eines adaptiven Scheinwerferlichts gemäß dem zweiten Aspekt implementiert ist. Vorteile und Wirkungen sowie Weiterbildungen des Fahrzeugs ergeben sich aus den Vorteilen und Wirkungen sowie Weiterbildungen des oben beschriebenen Systems. Zur Vermeidung von Wiederholungen wird daher in dieser Hinsicht auf die vorangegangene Beschreibung verwiesen.

Die Erfindung wird nun anhand der beigefügten Figuren näher erläutert. Für gleiche oder gleichwirkende Teile werden in den Figuren gleiche Bezugszeichen verwendet.
- Fig. 1: zeigt ein schematisches Blockdiagramm eines Systems zum Erzeugen eines adaptiven Scheinwerferlichts gemäß einem Ausführungsbeispiel,
- Fig. 2: zeigt schematisch eine zeitliche Bildabfolge gemäß einem Ausführungsbeispiel, und
- Fig. 3: zeigt ein Flussdiagramm eines Verfahrens zum Erzeugen eines adaptiven Scheinwerferlichts gemäß einem Ausführungsbeispiel.

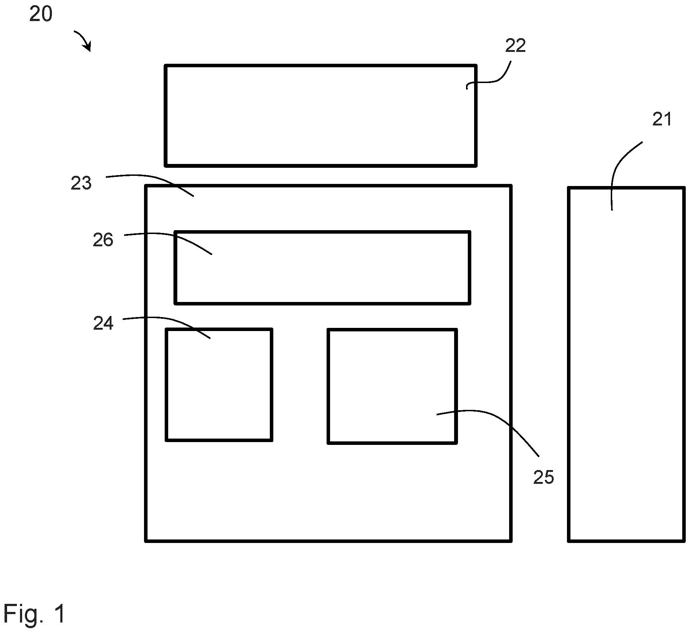

Fig. 1 zeigt ein schematisches Blockdiagramm eines Systems zum Erzeugen eines adaptiven Scheinwerferlichts gemäß einem Ausführungsbeispiel. Das System 20 umfasst eine Fahrzeugscheinwerferanlage 21. Die Fahrzeugscheinwerferanlage 21 besitzt vorzugsweise zwei Scheinwerfer mit einer Matrix-LED- bzw. Pixellicht-Einrichtung, die ausgebildet ist, eine Abblendlicht- sowie eine blendfreie Fernlichtverteilung bereitzustellen. Die Fahrzeugscheinwerferanlage 21 kann insbesondere ein oder mehrere Fernlichtmodule zum Bereitstellen eines blendfreien Fernlichts sowie eine oder mehrere Abblendlichtmodule zum Bereitstellen eines Abblendlichts umfassen. Das wenigstens eine HD-Modul kann insbesondere ausgebildet sein, wenigstens ein HD-Lichtfeld auszuleuchten, welches sich in vertikaler Richtung wenigstens teilweise über eine Hell-Dunkel-Grenze des Abblendlichts bzw. Low Beam Cut-Off Line erstreckt.

Die Fahrzeugscheinwerferanlage 21 umfasst wenigstens ein HD-Modul zum hochaufgelösten Ausleuchten wenigstens eines HD-Lichtfelds. Insbesondere kann das wenigstens eine HD-Modul dazu ausgebildet sein, hochaufgelöste Bilder zur Darstellung von Symbolen und/oder Hinweisinformationen für Verkehrsteilnehmer zu erzeugen bzw. projizieren. Das wenigstens eine HD-Modul ist ferner ausgebildet, insbesondere neben einer Symbolprojektion, eine hochauflösende Lichtverteilung bereitzustellen, die sich in vertikaler Richtung zumindest teilweise über die Hell-Dunkel-Grenze des Abblendlichts erstreckt.

Der Einfachheit halber werden auch die HD-, Fernlicht- und Abblendlichtmodule in dem schematischen Blockdiagramm der Fig. 4 nicht gezeigt.

Das System 20 umfasst ferner eine Sensorik 22 zum Erfassen einer aktuellen Fahrsituation. Die Sensorik 22 kann insbesondere eine oder mehrere Sensoren zum Erfassen einer aktuellen Fahrzeugumgebung und/oder eines aktuellen Fahrzeugzustands umfassen. Insbesondere kann die Sensorik 22 Sensoren zum Erfassen einer Position wenigstens eines blendungskritischen Bereichs, insbesondere eines anderen durch die Fahrzeugscheinwerferanlage 21 einer Blendungsgefahr ausgesetzten Fahrzeugs umfassen. Beispielsweise kann die Sensorik 22 eine oder mehrere im sichtbaren Lichtspektrum arbeitende Kameras, Radar- oder LIDAR-Sensoren umfassen, um insbesondere die Position anderer Fahrzeuge bzw. der blendungskritischen Bereiche zuverlässig zu bestimmen. Durch die Integration mehrerer Sensoren bzw. mehrerer Quellen von Sensordaten kann die Steuereinheit die Position des anderen Fahrzeugs bzw. der blendungskritischen Bereiche genauer erfassen. Dies minimiert potenzielle Fehler bzw. Fehlsteuerungen der Fahrzeugscheinwerferanlage. Die Verwendung verschiedener Sensoren bzw. Sensorquellen zur Erfassung der Position des anderen Fahrzeugs bzw. der blendungskritischen Bereiche ermöglicht der Steuereinheit, die Fahrzeugumgebung besser zu erfassen, um die Fahrzeugscheinwerferanlage 21 besser an unterschiedliche Umgebungsbedingungen anzupassen.

Das System 20 umfasst auch eine Steuereinheit 23 zum Ansteuern der Fahrzeugscheinwerferanlage 21, wobei die Steuereinheit 23 einen Prozessor 24, eine Speichereinheit 25 und eine Schnittstelle 26 umfasst. Die Schnittstelle 26 ist insbesondere dazu ausgebildet, von der Sensorik Sensordaten zum Erfassen einer Position wenigstens eines blendungskritischen Bereichs, insbesondere wenigstens eines anderen durch die Fahrzeugscheinwerferanlage 21 einer Blendungsgefahr ausgesetzten Fahrzeugs, zu empfangen und Steuersignale zum Ansteuern der Fahrzeugscheinwerferanlage 21 auszugeben. Die Steuereinheit 23 kann insbesondere durch Speichern von Daten bzw. maschinenlesbaren Anweisungen in der Speichereinheit 25 konfigurierbar sein.

Die Speichereinheit 25 enthält Anweisungen für den Prozessor 24, die empfangenen Sensordaten zum Ermitteln der aktuellen Fahrsituation auszuwerten und basierend auf der aktuellen Fahrsituation die Fahrzeugscheinwerferanlage 21 anzusteuern.

Insbesondere kann die Speichereinheit 25 Anweisungen für den Prozessor enthalten, die Fahrzeugscheinwerferanlage 21 zum gezielten Abdunkeln von durch die Auswertung der Sensordaten ermittelten blendungskritischen Bereiche anzusteuern. Die Speichereinheit 25 kann ferner Anweisungen für den Prozessor 24 enthalten, Sensordaten zum Ermitteln eines aktuellen Fahrzeugzustands auszuwerten und die Fahrzeugscheinwerferanlage 21 wenigstens teilweise basierend auf dem aktuellen Fahrzeugzustand anzusteuern. Der aktuelle Fahrzeugzustand kann insbesondere aktuelle Benutzereinstellungen und/oder aktuellen Fahrzeugstand des Fahrzeugs umfassen. Durch die Ansteuerung der Fahrzeugscheinwerferanlage 21 kann die Ausleuchtung des Scheinwerferlichtfelds an den aktuellen Fahrzeugzustand angepasst werden.

In einigen Ausführungsbeispielen verfügt die Fahrzeugscheinwerferanlage 21 über eine blendfreie Abblendlichtfunktionalität, um ggf. indirekte Blendung, beispielsweise durch Reflexionen an einer nassen Fahrbahn, zu verhindern. Die Steuereinheit 23 kann konfiguriert sein, bzw. die Speichereinheit 25 kann Anweisungen für den Prozessor 24 enthalten, das eine oder mehrere HD-Module zum Unterstützen der Abblendfunktionalität anzusteuern, so dass die Gesamtfläche der Dunkelzonen in dem Abblendlichtfeld reduziert werden kann.

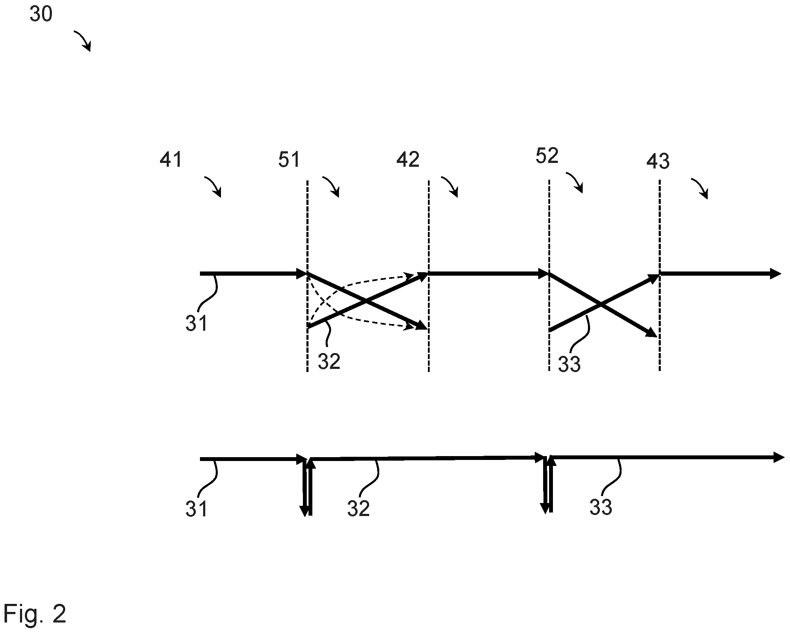

Fig. 2 zeigt schematisch eine zeitliche Bildabfolge gemäß einem Ausführungsbeispiel. Insbesondere zeigt Fig. 2 eine Bildabfolge 30 mit drei aufeinanderfolgenden Frames bzw. drei durch das wenigstens eine HD-Modul zu erzeugenden Bildern. Auf der horizontalen X-Achse ist die Zeit in relativen Einheiten und auf der vertikalen Y-Achse ist die Helligkeit des jeweiligen Bilds in relativen Einheiten dargestellt. Der zeitliche Verlauf der Bildhelligkeit bzw. Projektionshelligkeit wird durch entsprechende Helligkeitskurven visualisiert.

Insbesondere zeigt Fig. 2 eine erste Helligkeitskurve 31 zum Darstellen des Helligkeitsverlaufs des ersten Bildes, eine zweite Helligkeitskurve 32 zum Darstellen des Helligkeitsverlaufs des zweiten Bildes und eine dritte Helligkeitskurve 33 zum Darstellen des Helligkeitsverlaufs des dritten Bildes.

Gemäß dem gezeigten Ausführungsbeispiel wird in einem ersten Zeitintervall 41 ein erstes Bild erzeugt bzw. durch das wenigstens eine HD-Modul der Fahrzeugscheinwerferanlage 21 mit einer nominellen bzw. maximalen Helligkeit projiziert. Das erste Bild kann insbesondere durch die Steuereinheit 23 basierend auf einer ersten aktuellen Fahrsituation ermittelt bzw. berechnet worden sein.

In einem zweiten Zeitintervall 42 wird ein zweites Bild erzeugt bzw. durch das wenigstens eine HD-Modul der Fahrzeugscheinwerferanlage 21 mit einer nominellen bzw. maximalen Helligkeit projiziert. Das zweite Bild kann insbesondere durch die Steuereinheit 23 basierend auf einer zweiten bzw. geänderten aktuellen Fahrsituation ermittelt bzw. berechnet worden sein.

In einem dritten Zeitintervall 43 wird ein drittes Bild erzeugt bzw. durch das wenigstens eine HD-Modul der Fahrzeugscheinwerferanlage 21 mit einer nominellen bzw. maximalen Helligkeit projiziert. Das dritte Bild kann insbesondere durch die Steuereinheit 23 basierend auf einer dritten bzw. nochmals geänderten aktuellen Fahrsituation ermittelt bzw. berechnet worden sein.

Die Abfolgen der drei Bilder entspricht somit einer adaptiven Steuerung der Fahrzeugscheinwerferanlage 21, wobei die HD-Module der Fahrzeugscheinwerferanlage 21 basierend auf jeweils aktueller Fahrsituation gesteuert werden.

In dem gezeigten Ausführungsbeispiel weist die zeitliche Bildabfolge 30 ferner ein erstes Übergangszeitintervall 51 zwischen dem ersten Zeitintervall 41 und dem zweiten Zeitintervall 42 sowie ein zweites Übergangszeitintervall 52 zwischen dem zweiten Zeitintervall 42 und dem dritten Zeitintervall 43 auf.

In dem ersten Übergangsintervall 51 nimmt die Helligkeit des ersten Bilds monoton ab, vgl. Kurve 31, und die Helligkeit des zweiten Bildes nimmt monoton zu, vgl. Kurve 32.

In dem zweiten Übergangsintervall 52 nimmt die Helligkeit des zweiten Bilds graduell insbesondere monoton ab, vgl. Kurve 32, und die Helligkeit des dritten Bilds nimmt graduell insbesondere monoton zu, vgl. Kurve 33.

Zum Vergleich wird unten im Bild eine entsprechende Bildabfolge ohne Übergangsintervalle eingeblendet. Dabei werden die Bilder, insbesondere sobald sie von der Steuereinheit 23 berechnet worden sind, ohne graduelle Anstiegsphasen hart hintereinandergeschaltet. Da die Steuereinheit 23 bzw. der Prozessor 24 über eine begrenzte Rechenleistung verfügt, können die Bilder nicht mit einer beliebig hohen Framerate bzw. fps (frames per second) erzeugt werden. Dadurch kann es zu visuell wahrnehmbaren Bildsprüngen kommen, was unten im Bild schematisch dargestellt ist. Diese Sprünge können von Verkehrsteilnehmern insbesondere Fahrzeugfahrern als störend empfunden werden.

Aufgrund des graduellen Übergangs in den Übergangsintervallen 51 und 52 hingegen entsteht ein sanfter bzw. weitgehend stufenloser Übergang zwischen den einzelnen Bildern bzw. Frames, so dass störende Sprünge zwischen den einzelnen Frames vermieden werden können.

In einigen Ausführungsbeispielen wächst bzw. fällt die Bildhelligkeit in den Übergangsintervallen im Wesentlichen linear mit der Zeit, wobei die Helligkeit eines durch ein neues Bild zu ersetzenden Bilds im Wesentlichen gleichermaßen abnimmt wie die Helligkeit des neuen Bilds zunimmt.

Es ist auch denkbar, dass die Bildhelligkeit in den Übergangsintervallen nicht linear verläuft. Es ist insbesondere denkbar, dass Helligkeitsverlauf logarithmisch verläuft, wie in Fig. 2 schematisch als gestrichelte Pfeile in dem Übergangsintervall 51 dargestellt. Durch einen logarithmischen oder logarithmusähnlichen Helligkeitsverlauf kann insbesondere erreicht werden, dass die Helligkeitsänderungen in den Übergangsintervallen bzw. Übergangsphasen vom menschlichen Auge als im Wesentlichen lineare Helligkeitsänderungen wahrgenommen und somit weniger störend empfunden werden. Diese Helligkeitsverhalten entsprechen einer Kreuzblende, was einen besonders sanften Übergang zwischen einzelnen Bildern ermöglicht.

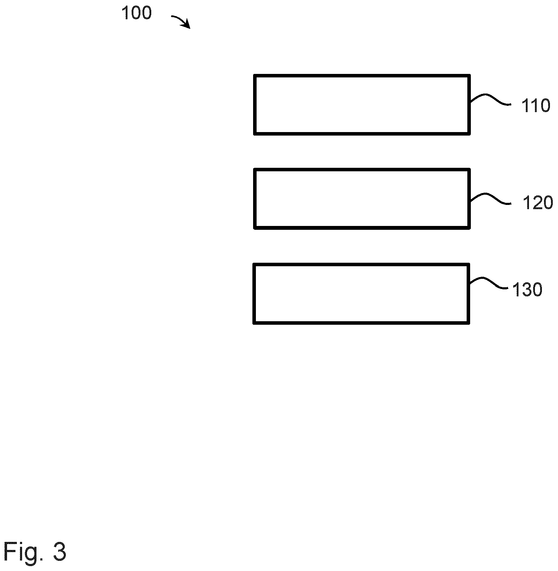

Fig. 3 zeigt ein Flussdiagramm eines Verfahrens zum Erzeugen eines adaptiven Scheinwerferlichts gemäß einem Ausführungsbeispiel. Das Verfahren 100 kann insbesondere mittels eines Systems 20 zum Erzeugen eines adaptiven Scheinwerferlichts gemäß Fig. 1 durchgeführt werden. Gemäß dem Verfahren 100 werden in einem Verfahrensschritt 110 Sensordaten von einer Sensorik zum Erfassen einer aktuellen Fahrsituation bereitgestellt.

In einem Verfahrensschritt 120 werden die Sensordaten zum Ermitteln der aktuellen Fahrsituation ausgewertet. Die Auswertung kann insbesondere mittels der Steuereinheit 23 erfolgen. Die Auswertung der Sensordaten kann insbesondere Erkennung von Verkehrsteilnehmern umfassen. Ferner kann die Auswertung Erkennung vertikaler und horizontaler Begrenzungen der Windschutzscheibe, Heckscheibe und/oder Seitenrückspiegel von einer Blendungsgefahr ausgesetzten Fahrzeugen umfassen. Die Auswertung kann ferner Ermittlung von Entfernungs- und Winkelinformationen bzw. Winkel-Koordinaten aus verarbeiteten Kamerabildern und Bereitstellung erkannter Objektkoordinaten für blendfreien Fernlichtalgorithmus umfassen.

In einem weiteren Verfahrensschritt 130 wird die Fahrzeugscheinwerferanlage 21 basierend auf der aktuellen Fahrsituation angesteuert, so dass bei einer Situationsänderung ein erstes Bild graduell in ein zweites Bild übergeht. Durch die Ansteuerung der Fahrzeugscheinwerferanlage kann in dem Scheinwerferlichtfeld wenigstens eine Dunkelzone unter Ausnutzung der HD-Funktionalität der Fahrzeugscheinwerferanlage erzeugt werden. Der Verfahrensschritt 130 kann insbesondere Ansteuern wenigstens eines Fernlichtmoduls der Fahrzeugscheinwerferanlage 21 zum Erzeugen einer Dunkelzone in der Fernlichtverteilung sowie Ansteuern wenigstens eines HD-Moduls zum Verkleinern der Dunkelzone umfassen. Insbesondere kann die HD-Funktionalität der Fahrzeugscheinwerferanlage unterstützend für die Fernlichtfunktionalität eingesetzt werden, in dem ein oder mehrere HD-Module die wenigstens teilweise die Fernlichtfunktionalität übernimmt. Auf diese Weise kann die hohe Auflösung des HD-Lichts zur Verbesserung der Scheinwerferperformance in dem blendfreien Fernlichtmodus ausgenutzt werden.

Mittels der hochaufgelösten HD-Funktionalität können insbesondere auf blendungskritische Bereiche maßgeschneiderte Dunkelzonen erzeugt werden, welche wenigstens teilweise von HD-Pixels eingegrenzt werden. Beispielsweise können Dunkelzonen in einer vertikalen Richtung, insbesondere von unten und/oder von oben durch HD-Pixeln eingegrenzt werden, um ggf. die niedrige Auflösung des grobsegmentierten Fernlichts zu kompensieren.

Mit dem wenigstens einen HD-Lichtmodul kann insbesondere ein Lichtverteilungsmuster in vertikaler und horizontaler Richtung derart moduliert werden, dass eine blendfreie HD-Lichtfunktion bereitgestellt werden kann.

Aufgrund der Kreuzblende bzw. Image Blending mit sich teilweise überlappenden Bildern kann eine hohe HD-Performance mit flüssigem Bildverlauf und eine fließende Adaption der Lichtverteilung der Fahrzeugscheinwerferanlage erzielt werden. Technische Lösungen ohne Image Blending müssen hingegen entweder höhere Kosten für eine größere Steuereinheit oder deutliche Abstriche in der Performance bzw. Ruckeln und Flackern von Bildern in Kauf nehmen. Insbesondere schnelle Kantenbewegungen, die z. B. bei blendfreien Fernlichtsystemen vorkommen, sind anfällig für sichtbare "Ruckelbewegungen", wenn die Anzahl der Bilder pro Sekunde bzw. fps (frames per second) nicht ausreichend ist. Beispielsweise arbeiten durchschnittliche HD-Lichtmodule mit einer Auflösung von ca. 0,1° pro Pixel. Muss ein Schattenbereich innerhalb einer blendfreien Fernlichtverteilung mit 20°/s horizontal bewegt werden und stehen lediglich 10 fps zur Verfügung, so kann die Lichtkante des Schattenbereichs nur in 2° Schritten angepasst werden. Dies entspräche einer effektiven Auflösung von Standard Matrixmodulen mit ca. 8 - 16 Segmente pro Scheinwerfer. Die Performance wirkt bei HD-Systemen in diesem beschriebenen Fall dann noch schlechter als bei Standard Matrix Modulen, da diese mit Segment-Abdimmzeiten arbeiten und damit einen weichen, fasst fließenden Verlauf schaffen. Die bewegten Lichtkanten können zudem bei einer unzureichenden Framerate zu störenden Lichtblitzen führen, wenn sie beispielsweise auf ein reflektierendes Straßenschild projiziert werden.

Das oben beschriebene Verfahren schafft Abhilfe. Denn durch das Image Blending kann auch bei einer verhältnismäßig niedrigen Framerate eine fließend erscheinende Adaption der Lichtverteilungen erzeugt werden. Weil die Framerate maßgeblich von der Leistung der Steuereinheit bzw. CPU abhängt, kann durch das Verfahren eine fließende Adaption mit weniger leistungsfähigen Prozessoren und somit kontengünstig realisiert werden. Bei Verwendung einer zentralen Steuereinheit oder Fahrzeugsteuergeräts zu Berechnung von einzelnen Frames kann das Verfahren helfen, die Rechenleistung zu reduzieren und die Gesamtbilanz der Prozesse zu verbessern.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der vorliegenden Offenbarung in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche und ihrer rechtlichen Äquivalente zu verlassen. Außerdem können nach den hier beschriebenen Prinzipien auch mehrere Module bzw. mehrere Produkte miteinander verbunden werden, um weitere Funktionen zu erhalten.

### Bezugszeichenliste

- 20: System
- 21: Fahrzeugscheinwerferanlage
- 22: Sensorik
- 23: Steuereinheit
- 24: Prozessor
- 25: Speichereinheit
- 26: Schnittstelle

- 30: Bildabfolge
- 31: erste Helligkeitskurve
- 32: zweite Helligkeitskurve
- 33: dritte Helligkeitskurve

- 41: erstes Zeitintervall
- 42: zweites Zeitintervall
- 43: drittes Zeitintervall

- 51: erstes Übergangszeitintervall
- 52: zweites Übergangszeitintervall

- 100: Verfahren
- 110: Verfahrensschritt
- 120: Verfahrensschritt
- 130: Verfahrensschritt

## Patentansprüche

1. Steuereinheit zum Erzeugen eines adaptiven Scheinwerferlichts mittels einer Fahrzeugscheinwerferanlage mit wenigstens einem HD-Modul zum Erzeugen von hochaufgelösten Bildern in wenigstens einem HD-Lichtfeld, umfassend:
- einen Prozessor (24),
- eine Speichereinheit (25) zum Speichern von Daten und maschinenlesbaren Anweisungen für den Prozessor (24), und
- eine Schnittstelle (26), wobei die Schnittstelle (26) dazu ausgebildet ist, Sensordaten von einer Sensorik zum Erfassen einer aktuellen Fahrsituation zu empfangen und Steuersignale zum Ansteuern der Fahrzeugscheinwerferanlage (21) auszugeben, und wobei die Speichereinheit (25) Anweisungen für den Prozessor (24) enthält,
die Sensordaten auszuwerten und die Fahrzeugscheinwerferanlage basierend auf der aktuellen Fahrsituation so anzusteuern, dass bei einer Situationsänderung ein erstes Bild graduell in ein zweites Bild übergeht.

2. Steuereinheit nach Anspruch 1, wobei die Speichereinheit (25) Anweisungen für den Prozessor (24) enthält, die Fahrzeugscheinwerferanlage so anzusteuern, dass das erste Bild während einer vordefinierten Übergangszeit in das zweite Bild graduell übergeht.

3. Steuereinheit nach Anspruch 2, wobei die Speichereinheit (25) Anweisungen für den Prozessor (24) enthält, die Fahrzeugscheinwerferanlage so anzusteuern, dass während der Übergangszeit sowohl das erste Bild als auch das zweite Bild erzeugt werden.

4. Steuereinheit nach einem der vorhergehenden Ansprüche, wobei die Speichereinheit (25) Anweisungen für den Prozessor (24) enthält, die Fahrzeugscheinwerferanlage so anzusteuern, dass das erste Bild durch eine Überblendung mit einer Kreuzblendenfunktion in das zweite Bild übergeht.

5. Steuereinheit nach einem der vorhergehenden Ansprüche, wobei die Speichereinheit (25) Anweisungen für den Prozessor (24) enthält, die die Fahrzeugscheinwerferanlage zum Erzeugen wenigstens einer Dunkelzone in einem Fernlichtfeld und/oder in einem Abblendlichtfeld der Fahrzeugscheinwerferanlage unter Ausnutzung der HD-Funktionalität anzusteuern, falls die Auswertung der Sensordaten ergibt, dass die wenigstens eine Dunkelzone wenigstens teilweise innerhalb des HD-Lichtfelds und gleichzeitig innerhalb des Fernlichtfelds und/oder innerhalb des Abblendlichts fällt.

6. System zum Erzeugen eines adaptiven Scheinwerferlichts, umfassend:
- eine Fahrzeugscheinwerferanlage (21) mit wenigstens einem HD-Modul zum Erzeugen von hochaufgelösten Bildern in wenigstens einem HD-Lichtfeld,
- eine Steuereinheit (23) nach einem der Ansprüche 1 bis 5, sowie
- eine Sensorik (22) zum Erfassen einer aktuellen Fahrsituation,
wobei die Speichereinheit (25) Anweisungen für den Prozessor (24) enthält, die Sensordaten auszuwerten und die Fahrzeugscheinwerferanlage basierend auf der aktuellen Fahrsituation so anzusteuern, dass bei einer Situationsänderung ein erstes Bild graduell in ein zweites Bild übergeht.

7. System nach Anspruch 6, wobei die Fahrzeugscheinwerferanlage (21) wenigstens ein Fernlichtmodul zum Bereitstellen einer blendfreien Fernlichtfunktionalität und wenigstens ein Abblendlichtmodul zum Bereitstellen einer Abblendlichtfunktionalität umfasst, und wobei das wenigstens eine HD-Modul zum Ausleuchten wenigstens eines HD-Lichtfelds ausgebildet ist, welches sich in vertikaler Richtung wenigstens teilweise über eine Hell-Dunkel-Grenze des Abblendlichts erstreckt.

8. System nach Anspruch 7, wobei das wenigstens eine Abblendmodul zum Bereitstellen einer blendfreien Abblendfunktionalität ausgebildet ist, wobei die Speichereinheit (25) Anweisungen für den Prozessor (24) enthält, das wenigstens eine HD-Modul zur Unterstützung der Abblendfunktionalität des wenigstens einen Abblendmoduls anzusteuern

9. Verfahren zum Erzeugen eines adaptiven Scheinwerferlichts mittels einer Fahrzeugscheinwerferanlage mit wenigstens einem HD-Modul zum Erzeugen von hochaufgelösten Bildern in wenigstens einem HD-Lichtfeld, umfassend:
- Bereitstellen (110) von Sensordaten von einer Sensorik zum Erfassen einer aktuellen Fahrsituation,
- Auswerten (120) der Sensordaten zum Ermitteln der aktuellen Fahrsituation,
- Ansteuern (130) der Fahrzeugscheinwerferanlage basierend auf der aktuellen Fahrsituation, so dass bei einer Situationsänderung ein erstes Bild graduell in ein zweites Bild übergeht.

10. Fahrzeug, umfassend eine Fahrzeugscheinwerferanlage mit einer HD-Funktionalität zum Erzeugen von hochaufgelösten Bildern in wenigstens einem HD-Lichtfeld, wobei in dem Fahrzeug ein System gemäß einem der Ansprüche 6 bis 8 zum Erzeugen eines adaptiven Scheinwerferlichts implementiert ist.
